# FASCICULE DE BREVET EUROPEEN

(11) **EP 1 549 509 B1**
(45) Date de publication et mention de la délivrance du brevet: **05.07.2006**
(21) Numéro de dépôt: 03761606.7
(22) Date de dépôt: 29.04.2003
(51) Int. Cl.: B43K 8/22

(54) **INSTRUMENT D'ECRITURE A JET DE LIQUIDE**
FLÜSSIGKEITSSTRAHLSCHREIBGERÄT
LIQUID JET WRITING INSTRUMENT

(30) Priorité: 28.06.2002 FR 0208109
(43) Date de publication de la demande: 06.07.2005
(73) Titulaire: Société BIC, 92611 Clichy Cedex (FR)
(72) Inventeur: BICH, Xavier, F-92200 Neuilly-sur-Seine (FR); ROZENWEIG, Alain, F-94170 Saint-Maur-des-Fosses (FR); RATH, Kurt, F-92200 Neuilly-sur-Seine (FR)
(74) Mandataire: Garel, Régis
(86) Numéro de dépôt international: PCT/FR2003/001342
(87) Numéro de publication internationale: WO 2004/002751

(56) Documents cités:
- EP-A- 0 931 649
- DE-A- 4 419 735
- GB-A- 2 343 867
- US-A- 5 501 535
- US-A- 5 757 498
- US-A- 5 928 711

## Description

La présente invention se rapporte aux instruments d'écriture à jet de liquide tel que de l'encre.

Plus particulièrement, l'invention concerne, parmi ces instruments d'écriture, ceux qui comprennent un élément sensiblement tubulaire qui s'étend entre une première extrémité et une deuxième extrémité et qui est destiné à être tenu dans une main d'un utilisateur, ledit élément tubulaire comportant :
- un réservoir de liquide,
- un système de projection de liquide comprenant une tête de projection de liquide reliée au réservoir de liquide, la tête de projection étant destinée à projeter à distance le liquide sur un support, et
- une unité de traitement destiné à activer le système de projection de liquide pour permettre à la tête de projection de projeter à distance le liquide sur le support.

Dans les instruments d'écriture connus de ce type, voir US 5,501,535 A, l'élément tubulaire comprend généralement un palpeur présentant une première extrémité destinée à venir au contact du support lors de l'écriture, et une deuxième extrémité reliée à un mécanisme de détection des mouvements du palpeur en contact avec le support. Ce mécanisme de détection est relié à l'unité de traitement pour permettre l'activation du système de projection de liquide. Ainsi, lorsque l'utilisateur tient en main l'instrument d'écriture et qu'il le rapproche du support, le palpeur vient au contact de la surface du support, ce qui permet au mécanisme de détection d'envoyer un signal à l'unité de traitement pour permettre l'activation de projection de liquide.

Dès lors, bien que la tête d'écriture, à savoir la tête de projection de liquide, n'ait plus besoin d'être au contact du support, il est toutefois impératif que le palpeur de l'instrument d'écriture soit, quant à lui, au contact du support pour pouvoir démarrer la projection de liquide. Cette mise en contact du palpeur sur le support peut notamment s'avérer gênante pour l'utilisateur lorsque la rugosité dudit support est plus ou moins importante.

Par ailleurs, l'extrémité du palpeur en contact avec le support étant généralement à proximité du point d'impact de la projection de liquide sur ledit support, il existe des risques importants que ladite extrémité du palpeur vienne en contact avec le liquide non encore séché en l'étalant ainsi sur le support lors d'une utilisation normale de l'instrument d'écriture.

Enfin, le palpeur qui s'étend nécessairement au-delà de la tête de projection de liquide, est également susceptible d'être soumis à un choc brutal entraînant une détérioration irrémédiable du mécanisme de détection provoquant ainsi la mise hors d'état de fonctionnement de l'ensemble de l'instrument d'écriture.

La présente invention a pour but de pallier les problèmes techniques mentionnés ci-dessus, en proposant un instrument d'écriture fiable, simple et qui fournisse un confort d'écriture optimum pour l'utilisateur.

A cet effet, l'invention a pour objet un instrument d'écriture, comprenant des moyens de détection de mouvement de la tête de projection, les moyens de détection de mouvement étant reliés à l'unité de traitement, caractérisé en ce que l'élément tubulaire comprend, en outre :
- des moyens de mesure pour mesurer, sans contact physique de l'instrument d'écriture avec le support, la distance entre la tête de projection et le support, les moyens de mesure étant reliés à l'unité de traitement, et en ce que l'unité de traitement est adaptée pour commander l'activation du système de projection de liquide lorsque, d'une part, les moyens de mesure déterminent que la distance entre la tête de projection et le support est inférieure à une valeur maximale prédéterminée, et que d'autre part, les moyens de détection de mouvement détectent un mouvement de la tête de projection.

Grâce à ces dispositions, l'instrument d'écriture ne présente plus aucun contact avec le support sur lequel est destiné à être projeté le liquide, et l'utilisateur de l'instrument commande simplement l'activation de la projection d'encre en rapprochant l'instrument à une distance adéquate du support tout en lui transmettant un mouvement. Cette activation de la projection de liquide peut donc être stoppée par l'utilisateur, soit en immobilisant sa main et donc l'instrument, soit en écartant l'instrument d'écriture ou plus exactement la tête de projection de liquide du support. Cet instrument d'écriture permet donc de provoquer ou non la projection de liquide dans des conditions optimales qui se rapprochent des conditions d'écriture connues jusqu'à présent avec des instruments d'écriture classiques tels que les stylos à bille ou à feutre, sans toutefois nécessiter le moindre contact physique avec le support d'écriture.

Dans des formes de réalisation préférés de l'invention, on a recours, en outre, à l'une et ou à l'autre des dispositions suivantes :
- l'unité de traitement est adaptée pour commander l'activation du système de projection de liquide lorsque, d'une part, les moyens de mesure déterminent que la distance entre la tête de projection et le support est comprise entre une valeur minimale prédéterminée et ladite valeur maximale prédéterminée, et que d'autre part, les moyens de détection de mouvement détectent un mouvement de la tête de projection ;
- les moyens de mesure comprennent un système optique destiné à mesurer la distance entre la tête de projection et le support ;
- les moyens de détection de mouvement sont formés par le système optique et l'unité de traitement qui détermine des déplacements relatifs de la tête de projection par rapport au support en fonction des distances mesurées par le système optique ;
- les moyens de mesure comprennent une sonde acoustique à ultrasons destinée à mesurer la distance entre la tête de projection et le support ;
- les moyens de détection de mouvement sont formés par la sonde acoustique et l'unité de traitement qui détermine des déplacements relatifs de la tête de projection par rapport au support en fonction des distances mesurées par la sonde acoustique ;
- les moyens de détection de mouvement comprennent un accéléromètre ;
- l'élément tubulaire comprend une source d'alimentation électrique et des moyens de mise sous tension reliés à la source d'alimentation électrique, lesdits moyens de mise sous tension étant actionnables par l'utilisateur pour permettre la mise sous tension du système de projection de liquide, de l'unité de traitement et des moyens de mesure et de détection de mouvement ;
- l'élément tubulaire comprend des moyens d'émission d'un spot lumineux visible sur le support pour représenter le point d'impact de la projection du liquide sur le support ;
- la tête de projection de liquide comprend au moins une buse de projection de gouttelettes de liquide, et le système de projection comprend en outre un générateur de signaux électriques pour commander l'activation de ladite au moins une buse de la tête de projection ;
- l'élément tubulaire comprend une paroi externe sur laquelle sont rapportés des moyens de sélection de la taille des gouttelettes, lesdits moyens de sélection étant reliées aux générateur de signaux électriques du système de projection pour faire varier la fréquence et/ou l'amplitude desdits signaux électriques commandant l'activation de ladite au moins une buse de projection ;
- l'unité de traitement est adaptée pour activer des moyens de communication destinés à émettre un signal d'alerte à l'utilisateur lorsque, d'une part, les moyens de mesure déterminent que la distance entre la tête de projection et le support est au moins inférieure à une valeur maximale prédéterminée, et que d'autre part, les moyens de détection de mouvement ne détectent aucun mouvement de la tête de projection pendant un intervalle de temps prédéterminé ; et
- lorsque le système de projection de liquide n'a pas été activé pendant un premier intervalle de temps, l'unité de traitement est adaptée pour activer pendant un deuxième intervalle de temps des moyens de communication destinés à émettre un signal d'alerte, et à commander ensuite l'activation du système de projection de liquide lorsque les moyens de mesure déterminent que la distance entre la tête de projection et le support est à nouveau inférieure à la valeur maximale prédéterminée et que les moyens de détection de mouvement détectent à nouveau un mouvement de la tête de projection.

D'autres caractéristiques et avantages de l'invention apparaîtront au cours de la description qui va suivre de plusieurs de ses formes de réalisation, données à titre d'exemple non limitatif, en regard des dessins joints.

Sur les dessins :
- la figure 1 est une vue schématique en coupe de l'instrument d'écriture selon un premier mode de réalisation de l'invention ;
- la figure 2 est un schéma bloc des différents éléments constituants l'instrument d'écriture conforme à l'invention ; et
- la figure 3 est une vue en coupe de l'instrument d'écriture selon un deuxième mode de réalisation.

Sur les différentes figures, les mêmes références désignent des éléments identiques ou similaires.

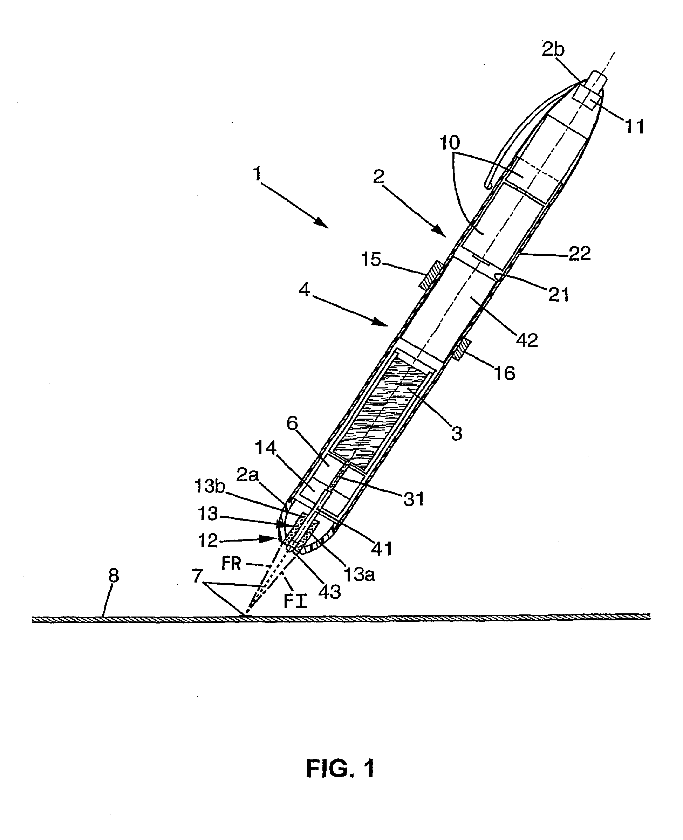

La figure 1 représente un instrument d'écriture 1 qui comprend un élément sensiblement tubulaire 2 qui s'étend entre une première extrémité 2a et une deuxième extrémité 2b. Cet élément tubulaire 2 présente une paroi interne 21 délimitant un espace intérieur creux, et une paroi externe 22 destinée à être prise en main par un utilisateur.

L'espace intérieur creux délimité par la paroi interne 21 de l'élément tubulaire 2 comprend un réservoir de liquide 3 et un système de projection 4 dudit liquide directement associé au réservoir 3. Le réservoir de liquide 3 est monté de manière amovible dans l'espace intérieur creux de l'élément tubulaire 2 de manière à être remplacé après épuisement dudit liquide par un autre réservoir. Le liquide contenu dans ce réservoir peut, suivant les cas d'utilisation de l'instrument, être formé par de l'encre, ou par un liquide effaceur d'encre ou de masquage de l'encre lorsque l'instrument est utilisé comme correcteur ou bien par de la colle lorsque ledit instrument est utilisé comme applicateur ou pulvérisateur de colle. Le système de projection 4 est formé par une tête de projection 41 de liquide directement reliée par un canal 31 au réservoir de liquide 3, et par un générateur de signaux électriques 42 destiné à commander l'activation ou non de ladite tête de projection 41.

Dans l'exemple considéré ici, la tête de projection 41 est une tête de projection à effet piézoélectrique qui comporte une buse de projection 43 disposée au niveau de l'extrémité 2a de l'élément tubulaire 2. Cette extrémité 2a de l'élément tubulaire peut être constituée par un embout directement emmanché sur la paroi interne 22 de la partie centrale de l'élément tubulaire 2. Cet embout 2a présente un orifice d'extrémité dans lequel est disposée la buse 43 de la tête de projection 41. Cette buse de projection 43 peut être montée de manière fixe sur l'embout 2a ou alors de manière rétractable au moyen d'un mécanisme approprié afin de loger ladite buse à l'intérieur de l'embout en évitant ainsi tout risque de détérioration de ladite buse en cas de non utilisation de l'instrument d'écriture. La tête de projection 41 comprend, de manière connue en soi, un élément piézoélectrique adapté pour se déformer lorsqu'il est soumis aux signaux électriques provenant du générateur 42 en créant ainsi des microgouttelettes 7 au niveau de la buse de projection 43 et qui sont projetées sur le support 8.

Le système de projection 4 de liquide peut également être formé par un substrat, par exemple en verre, sur lequel est rapporté au moins un élément résistif chauffant positionné au niveau d'au moins un canal de faible dimension contenant une petite quantité d'encre provenant du réservoir 3. Ainsi, lorsqu'un signal électrique est généré par le générateur 41 sur l'élément résistif, ce dernier monte instantanément en température en créant ainsi une bulle de vapeur dans l'encre, laquelle bulle expulse une fine gouttelette 7 de liquide sur le support 8.

Le système de projection 4 de liquide peut également être formé par au moins une cartouche de gaz comprimé destinée à coopérer avec un mécanisme de détention d'air et avec une cartouche de liquide. Ce mécanisme de détention peut comprendre un poinçon destiné à libérer le gaz contenu dans la cartouche dans une préchambre sous pression et une pluralité de clapets afin de contrôler le débit de gaz jusqu'à une buse également reliée au réservoir de liquide 3.

L'instrument d'écriture comporte également une unité de traitement 6 destinée à activer le générateur de signaux électriques 42 (ou pulsation électrique) pour permettre à la buse de projection 43 du système de projection de projeter à distance les gouttelettes 7 sur le support 8. L'espace intérieur creux de l'élément tubulaire 2 comprend également au niveau de son extrémité 2b une source d'alimentation électrique formée, par exemple, par une pile, voire deux piles rechargeables ou non, permettant au moyen d'un interrupteur 11 la mise sous tension électrique des différents éléments électriques formant l'instrument d'écriture. Cet interrupteur 11 peut être remplacé par tous moyens de mise sous tension actionnable par l'utilisateur de l'instrument, et notamment par des moyens de détection de la prise en main de l'élément tubulaire 2 par l'utilisateur tels que, par exemple, un capteur capacitif disposé au niveau de la paroi externe 22 de l'élément tubulaire 2 et destiné à détecter une pression lors de la prise en main de l'instrument par l'utilisateur.

L'extrémité 2b de l'élément tubulaire 2 peut par exemple se présenter sous la forme d'un capuchon monté amovible sur la partie centrale dudit élément tubulaire 2 pour permettre le remplacement des deux piles 10 usagées par des piles neuves.

L'élément tubulaire 2 comprend également au niveau de son extrémité 2a des moyens de mesure 12 pour mesurer, sans aucun contact physique de l'instrument d'écriture sur le support 8, la distance entre la tête de projection 41 et le support 8. Plus exactement, les moyens de mesure 12 sont adaptés pour mesurer la distance entre la buse de projection 43 et le support 8.

Dans ce mode de réalisation, les moyens de mesure 12 sont constitués par un système optique 13 qui comprend, par exemple, une LED infrarouge 13a qui envoie un faisceau de lumière incident FI en direction du support 8 de manière à créer un spot lumineux sur ledit support 8 et un faisceau de lumière réfléchie FR qui seront ensuite analysés par une photodiode 13b de manière à calculer l'angle d'inclinaison du faisceau incident FI par rapport au support 8.

La distance entre la photodiode 13b et la LED infrarouge 13a étant connue et l'angle d'inclinaison du faisceau lumineux incident FI étant calculé, il suffit ensuite de calculer, par de simples relations trigonométriques, la distance qui sépare la LED infrarouge du support 8. Cette photodiode peut être formée par une photodiode S6560 commercialisée sous la marque HAMAMATSU.

Le faisceau de lumière incident FI issu du système optique 13 est sensiblement dirigé dans la même direction que la direction de projection des gouttelettes de liquide. Cette direction du faisceau de lumière incident se confond sensiblement, dans l'exemple considéré ici, avec l'axe longitudinal de l'élément tubulaire 2. Ainsi, la distance mesurée entre la buse de projection 43 et le support correspond également au trajet des gouttelettes depuis ladite buse 43 jusqu'au support 8.

Selon une autre variante de réalisation, le système optique 13 peut également comprendre des moyens d'émission d'un faisceau lumineux conique dont l'axe de symétrie se confond avec l'axe longitudinal de l'élément tubulaire 2. Le système optique comprend alors un capteur adapté pour calculer le rayon du spot lumineux formé par le faisceau conique sur le support 8. Le rayon du spot lumineux étant proportionnel à la distance qui sépare les moyens d'émission du faisceau conique du support 8, il est alors possible de déterminer de manière linéaire la distance entre les moyens d'émission et le support. De même, si l'axe de symétrie du faisceau conique est incliné par rapport au support, le spot lumineux créé sur le support ne sera plus circulaire mais ellipsoïdal, et le capteur sera également adapté pour mesurer la longueur du petit axe du spot ellipsoïdal afin de déterminer la distance qui sépare les moyens d'émission du faisceau conique du support. En effet, dans ce cas et quelle que soit l'inclinaison de l'instrument d'écriture, la longueur du petit axe du spot ellipsoïdal est uniquement proportionnelle à la distance qui sépare les moyens d'émission du support, seule la longueur du grand axe du spot ellipsoïdal étant proportionnelle à l'inclinaison du faisceau conique.

Selon une variante de réalisation, les moyens de mesure 12 peuvent également être constitués par une sonde acoustique à ultrasons. Dans ce cas, la distance mesurée entre la buse 43 et le support 8 correspond à la plus petite distance qui sépare ladite buse 43 du support 8 et ce, indépendamment de l'inclinaison de l'instrument d'écriture par rapport au support 8.

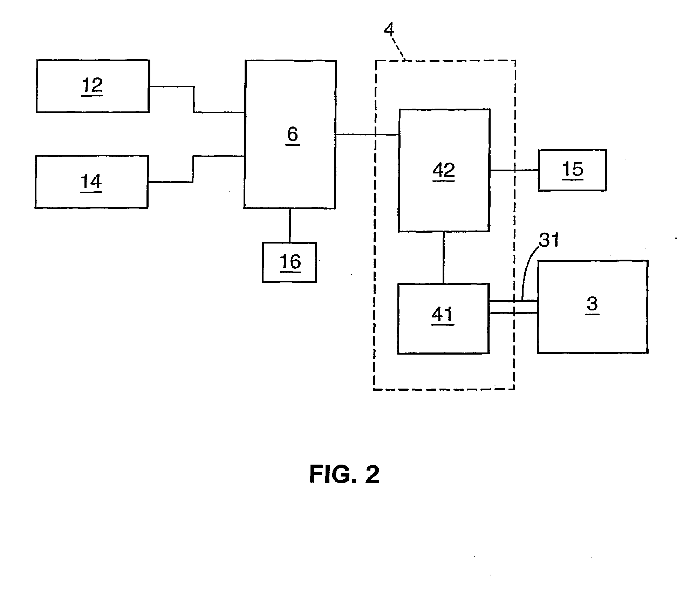

Comme on peut le voir en référence aux figures 1 et 2, le système optique 13 qui forme les moyens de mesure 12 est directement relié directement à l'unité de traitement 6 qui garde en mémoire la mesure effectuée par le système optique 13. L'unité de traitement peut également être adaptée pour commander au système optique 13 d'effectuer des opérations de mesure répétées dans des intervalles de temps déterminé. Ces intervalles de temps pourraient par exemple être compris entre 1 ms et 0,1 seconde.

L'élément tubulaire 2 comprend également des moyens de détection de mouvement 14 de la tête de projection 41 par rapport au support 8.

Dans ce mode de réalisation, les moyens de détection de mouvement 14 peuvent se présenter sous la forme d'un accéléromètre directement relié à l'unité de traitement 6. Les moyens de détection de mouvement 14 peuvent également se présenter sous la forme d'un gyroscope.

Le fonctionnement de l'instrument d'écriture va maintenant être décrit en regard des figures 1 et 2.

Lorsque l'utilisateur souhaite utiliser l'instrument d'écriture 1 pour écrire sur un support 2, il met tout d'abord en tension les différents éléments électriques dudit crayon en actionnant l'interrupteur 11.

L'utilisateur rapproche alors l'extrémité de l'instrument d'écriture en direction du support 8, de sorte que les moyens de mesure formés par le système optique 13 calculent automatiquement et sans contact physique avec le support 8 la distance qui sépare la buse de projection 43 du support 8. De la même manière, le mouvement de l'instrument d'écriture en direction du support 8 est détecté par l'accéléromètre 14 qui envoie directement un signal de détection à l'unité de traitement 6.

Cette unité de traitement 6 est adaptée pour commander l'activation du système de projection de liquide 4 et donc de la projection de gouttelettes 7 sur le support 8 uniquement lorsque les moyens de détection de mouvement 14 détectent un mouvement de l'instrument d'écriture et lorsque les moyens de mesure 12 formés par le système optique 13 déterminent que la distance entre la buse de projection 43 et le support 8 est inférieure à une valeur maximale prédéterminée.

Cette valeur maximale prédéterminée peut par exemple être, à titre indicatif, de l'ordre de 1 cm.

Ainsi, lorsque les moyens de mesure 12 déterminent que la distance entre la buse 43 et le support 8 est supérieure à la valeur maximale prédéterminée et que les moyens de détection détectent un mouvement de l'instrument d'écriture, l'unité de traitement 6 ne commandera pas l'activation du système de projection et aucune gouttelette ne sera projetée sur le support 8.

De même, l'unité de traitement 6 ne commandera pas la projection de gouttelettes lorsque l'instrument d'écriture n'est pas en mouvement même si la buse 43 est à une distance adéquate du support, c'est-à-dire à une distance inférieure à la valeur maximale prédéterminée.

Selon une variante de réalisation, l'unité de traitement 6 peut également être adaptée pour stopper l'activation du système de projection de liquide lorsque la buse de projection 43 est trop proche du support 8 pour permettre aux gouttelettes de liquide 7 d'être convenablement projetées sur le support. Dans ce cas, l'unité de traitement 6 commandera l'activation du système de projection de liquide uniquement si l'accéléromètre 14 détecte un mouvement de l'instrument d'écriture par rapport au support et si le système optique 13 détermine que la distance entre la buse de projection 43 et le support 8 est comprise dans une plage de valeur délimitée par une valeur minimale prédéterminée et une valeur maximale prédéterminée. L'élément tubulaire 2 de l'instrument d'écriture peut également comprendre sur sa paroi externe 22 des moyens de sélection 15 de la taille des gouttelettes 7 afin de moduler et de modifier l'épaisseur de la ligne qui sera formée par la succession de gouttelettes apposées sur le support 8. Ces moyens de sélection 15 peuvent notamment se présenter sous la forme d'un bouton par exemple à trois positions permettant d'obtenir trois épaisseurs de ligne différentes. Ce bouton 15 à position sélective est directement relié au générateur 42 de signaux électriques du système de projection 4 pour permettre de faire varier de manière prédéterminée la fréquence et/ou l'amplitude des signaux électriques directement envoyés à la tête de projection de liquide 41 en faisant ainsi varier proportionnellement la taille et la fréquence de projection des gouttelettes 7 sur le support 8.

De même, pour permettre un meilleur confort d'écriture à l'utilisateur, l'unité de traitement 6 peut être adaptée pour activer des moyens de communication 16 destinés à émettre un signal d'alerte lorsque, d'une part, le système optique 13 détermine que la distance entre la tête de projection d'encre 41 et le support 8 est au moins inférieure à une valeur maximale prédéterminée, et que d'autre part, les moyens de détection de mouvement 14 ne détectent aucun mouvement de la tête de projection 41 par rapport au support 8 pendant un intervalle de temps prédéterminé. Ces moyens de communication 16 peuvent par exemple se présenter sous la forme d'un émetteur de signaux lumineux visibles ou un émetteur de signaux acoustiques audibles permettant ainsi à l'utilisateur de savoir que la tête de projection de liquide 41 ou plus exactement la buse de projection 43 est à une distance adéquate du support pour permettre une activation du générateur 42 de signaux électriques et qu'un mouvement même accidentel de l'instrument d'écriture est susceptible de provoquer l'activation du système de projection 4 et donc la projection de gouttelettes de liquide sur le support 8.

De même, pour permettre un meilleur confort d'écriture à l'utilisateur, l'unité de traitement 6 peut être adaptée pour activer les moyens de communication 16 pour émettre un signal d'alerte lorsque le système de projection 4 de liquide n'a pas été activé depuis un intervalle de temps donné (par exemple 30 secondes ou une minute) et que les moyens de mesure 12 détectent que la distance est à nouveau adéquate entre la tête de projection 41 et le support 8 et que les moyens de détection de mouvement détectent à nouveau un mouvement de l'instrument d'écriture. Dans ce cas, l'unité de traitement active les moyens de communication pendant, par exemple, deux secondes pour prévenir l'utilisateur que la projection de liquide est imminente, et après cet intervalle de temps de deux secondes, l'unité de traitement 6 active alors le système de projection 4 de liquide.

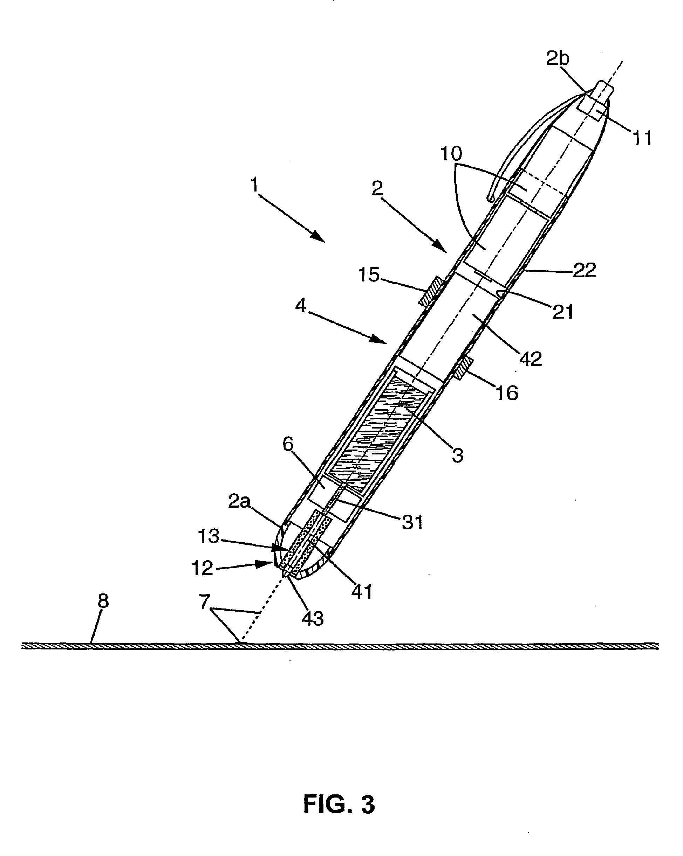

Selon une autre forme de réalisation de l'invention représentée sur la figure 3, les moyens de détection de mouvement de l'instrument d'écriture ne sont plus formés par un accéléromètre ou un gyroscope mais directement par l'unité de traitement 6 et par le système de mesure 12 destiné également à déterminer la distance entre la buse de projection 43 et le support 8.

En effet, comme il a déjà été décrit précédemment, l'unité de traitement 6 est susceptible de requérir de la part des moyens de mesure 12 des mesures répétées à des intervalles de temps très proches. Ainsi, dans ce cas, l'unité de traitement 6 est susceptible de déterminer des déplacements relatifs de la tête de projection 43 par rapport au support 8 en fonction de deux distances mesurées par les moyens de mesure 12 dans un intervalle de temps déterminé. Ces déplacements relatifs seront uniquement déterminés dans le cas où la tête de projection 41 ne se déplace pas dans un plan strictement parallèle au plan du support 8. Toutefois, lorsqu'un utilisateur normal utilise un instrument d'écriture pour écrire, il transmet automatiquement des micro-tremblements imperceptibles au niveau de la tête d'écriture, ces micro-tremblements étant alors automatiquement détectés par les moyens de mesure 12 et par l'unité de traitement 6 comme un mouvement. Dès lors, si la buse de projection 43 est dans une position adéquate par rapport au support 8, l'unité de traitement 6 déclenche l'activation du système de projection de liquide à distance.

Suivant ce mode de réalisation, les moyens de mesure 12 peuvent également être constitués par le système optique 13 ou par une sonde acoustique à ultrasons.

Dans le cas où les moyens de mesure 12 sont formés par une sonde acoustique à ultrasons, l'élément tubulaire 2 peut également être pourvu, au niveau de son extrémité 2a, de moyens d'émission d'un spot lumineux visible sur le support 8, ce spot lumineux étant destiné à représenter le point d'impact des gouttelettes 7 sur le support.

## Revendications

1. Instrument d'écriture comprenant un élément sensiblement tubulaire (2) qui s'étend entre une première extrémité (2a) et une deuxième extrémité (2b) et qui est destiné à être tenu dans une main d'un utilisateur, ledit élément tubulaire (2) comportant:
- un réservoir de liquide (3),
- un système de projection (4) de liquide comprenant une tête de projection (41) de liquide reliée au réservoir de liquide (3), la tête de projection (41) étant destinée à projeter à distance le liquide sur un support (8),
- une unité de traitement (6) destiné à activer le système de projection (4) de liquide pour permettre à la tête de projection (41) de projeter à distance le liquide sur le support (8), et
- des moyens de détection de mouvement (14;6,12) de la tête de projection (41), les moyens de détection de mouvement étant reliés à l'unité de traitement,
**caractérisé en ce que** l'élément tubulaire comprend en outre:
- des moyens de mesure (12) pour mesurer, sans contact physique de l'instrument d'écriture (1) avec le support (8), la distance entre la tête de projection (41) et le support (8), les moyens de mesure (12) étant reliés à l'unité de traitement (6),
**et en ce que** l'unité de traitement (6) est adaptée pour commander l'activation du système de projection (4) de liquide lorsque, d'une part, les moyens de mesure (12) déterminent que la distance entre la tête de projection (41) et le support (8) est inférieure à une valeur maximale prédéterminée, et que d'autre part, les moyens de détection de mouvement (14;6,12) détectent un mouvement de la tête de projection (41).

2. Instrument selon la revendication 1, dans lequel l'unité de traitement (6) est adaptée pour commander l'activation du système de projection (4) de liquide lorsque, d'une part, les moyens de mesure (12) déterminent que la distance entre la tête de projection (41) et le support (8) est comprise entre une valeur minimale prédéterminée et ladite valeur maximale prédéterminée, et que d'autre part, les moyens de détection de mouvement (14;6,12) détectent un mouvement de la tête de projection (41).

3. Instrument selon l'une ou l'autre des revendications 1 et 2, dans lequel les moyens de mesure (12) comprennent un système optique (13) destiné à mesurer la distance entre la tête de projection et le support.

4. Instrument selon la revendication 3, dans lequel les moyens de détection de mouvement sont formés par le système optique (13) et l'unité de traitement (6) qui détermine des déplacements relatifs de la tête de projection (41) par rapport au support (8) en fonction des distances mesurées par le système optique (13).

5. Instrument selon l'une ou l'autre des revendications 1 et 2, dans lequel les moyens de mesure (12) comprennent une sonde acoustique à ultrasons destinée à mesurer la distance entre la tête de projection (41) et le support (8).

6. Instrument selon la revendication 5, dans lequel les moyens de détection de mouvement sont formés par la sonde acoustique et l'unité de traitement (6) qui détermine des déplacements relatifs de la tête de projection (41) par rapport au support (8) en fonction des distances mesurées par la sonde acoustique.

7. Instrument selon l'une ou l'autre des revendications 3 et 5, dans lequel les moyens de détection de mouvement comprennent un accéléromètre (14).

8. Instrument selon l'une quelconque des revendications précédentes, dans lequel l'élément tubulaire (2) comprend une source d'alimentation électrique (10) et des moyens de mise sous tension (11) reliés à la source d'alimentation électrique (10), lesdits moyens de mise sous tension (11) étant actionnables par l'utilisateur pour permettre la mise sous tension du système de projection (4) de liquide, de l'unité de traitement (6) et des moyens de mesure (12) et de détection de mouvement (14;6,12).

9. Instrument selon l'une quelconque des revendications précédentes, dans lequel l'élément tubulaire (2) comprend des moyens d'émission d'un spot lumineux visible sur le support pour représenter le point d'impact de la projection du liquide sur le support (8).

10. Instrument selon l'une quelconque des revendications précédentes, dans lequel la tête de projection (41) de liquide comprend au moins une buse de projection (43) de gouttelettes (7) de liquide, et le système de projection (4) comprend en outre un générateur de signaux électriques (42) pour commander l'activation de ladite au moins une buse (43) de la tête de projection (41).

11. Instrument selon la revendication 10, dans lequel l'élément tubulaire (2) comprend une paroi externe (22) sur laquelle sont rapportés des moyens de sélection (15) de la taille des gouttelettes (7), lesdits moyens de sélection (15) étant reliées aux générateur de signaux électriques (42) du système de projection (4) pour faire varier la fréquence et/ou l'amplitude desdits signaux électriques commandant l'activation de ladite au moins une buse de projection (43).

12. Instrument selon l'une quelconque des revendications précédentes, dans lequel l'unité de traitement (6) est adaptée pour activer des moyens de communication (16) destinés à émettre un signal d'alerte à l'utilisateur lorsque, d'une part, les moyens de mesure (12) déterminent que la distance entre la tête de projection (41) et le support (8) est au moins inférieure à une valeur maximale prédéterminée, et que d'autre part, les moyens de détection de mouvement (14;6,12) ne détectent aucun mouvement de la tête de projection (41) pendant un intervalle de temps prédéterminé.

13. Instrument selon l'une quelconque des revendications précédentes, dans lequel, lorsque le système de projection (4) de liquide n'a pas été activé pendant un premier intervalle de temps, l'unité de traitement (6) est adaptée pour activer pendant un deuxième intervalle de temps des moyens de communication (16) destinés à émettre un signal d'alerte, et à commander ensuite l'activation du système de projection (4) de liquide lorsque les moyens de mesure (12) déterminent que la distance entre la tête de projection (41) et le support (8) est à nouveau inférieure à la valeur maximale prédéterminée et que les moyens de détection de mouvement détectent à nouveau un mouvement de la tête de projection (41).

## Claims

1. A writing instrument comprising a substantially tubular element (2) which extends between a first end (2a) and a second end (2b) and which is designed to be held in a hand of a user, said tubular element (2) comprising:
- a liquid reservoir (3);
- a liquid spray system (4) comprising a liquid spray head (41) connected to the liquid reservoir (8), the spray head (41) serving to spray the liquid onto a medium (8) from a distance; and
- a processor unit (6) serving to activate the liquid spray system (4) to enable the spray head (41) to spray the liquid onto the medium (8) from a distance, and
- movement detector means (14; 6,12) for detecting movement of the spray head (41), the movement detector means being connected to the processor unit;
**characterized in that** tubular element further comprises:
- measurement means (12) for acting without physical contact between the writing instrument (1) and the medium (8) to measure the distance between the spray head (41) and the medium (8), the measurement means (12) being connected to the processor unit (6);
and **in that** the processor unit (6) is adapted to cause the liquid spray system (4) to be activated both when the measurement means (12) determine that the distance between the spray head (41) and the medium (8) is less than a predetermined maximum value, and simultaneously the movement detector means (14; 6,12) detect movement of the spray head (41).

2. An instrument according to claim 1, in which the processor unit (6) is adapted to cause the liquid spray system (4) to be activated when both the measurement means (12) determine that the distance between the spray head (41) and the medium (8) lies in the range defined by a predetermined minimum value and said predetermined maximum value, and simultaneously the movement detector means (14; 6, 12) detect movement of the spray head (41).

3. An instrument according to claim 1 or 2, in which the measurement means (12) comprise an optical system (13) serving to measure the distance between the spray head and the medium.

4. An instrument according to claim 3, in which the movement detector means are formed by the optical system (13) and the processor unit (6) which detects displacements of the spray head (41) relative to the medium (8) as a function of the distances measured by the optical system(13).

5. An instrument according to claim 1 or 2, in which the measurement means (12) comprise an ultrasonic acoustic probe serving to measure the distance between the spray head (41) and the medium (8).

6. An instrument according to claim 5, in which the movement detector means are formed by the acoustic probe and the processor unit (6) which detects displacements of the spray head (41) relative to the medium (8) as a function of the distances measured by the acoustic probe.

7. An instrument according to claim 3 or 5, in which the movement detector means comprise an accelerometer (14).

8. An instrument according to anyone of the preceding claims, in which the tubular element (2) includes an electrical power source (10) and switch-on means (11) connected to the electrical power source (10), said switch-on means (11) being actuatable by the user for the purpose of switching on the liquid spray system (4), the processor unit (6), and the measurement means (12) and the movement detector means (14; 6,12).

9. An instrument according to anyone of the preceding claims, in which the tubular element (2) includes means for emitting a visible light spot onto the medium so as to represent the point of impact of the liquid spray on the medium (8).

10. An instrument according to anyone of the preceding claims, in which the liquid spray (41) head comprises at least one spray nozzle (43) for spraying droplets (7) of liquid, and the spray system (4) further comprises an electrical signal generator (42) for causing said at least one nozzle (43) of the spray head (41) to be activated.

11. An instrument according to claim 10, in which the tubular element (2) has an outside wall (22) on which selector means (15) are mounted for selecting the size of the droplets (7), said selector means (15) being connected to the electrical signal generator (42) of the spray system (4) to vary the frequency and/or the amplitude of said electrical signals that cause said at least one spray nozzle (43) to be activated.

12. An instrument according to anyone of the preceding claims, in which the processor unit (6) is adapted to activate communication means (16) serving to emit a warning signal to the user when both the measurement means (12) detect that the distance between the spray head (41) and the medium (8) is less than a predetermined maximum value, and simultaneously the movement detector means (14; 6, 12) have not detected any movement of the spray head (41) over a predetermined time interval.

13. An instrument according to anyone of the preceding claims, in which, when the liquid spray system (4) has not been activated for a first time interval, the processor unit (6) is adapted to activate communication means (16) for a second time interval, which communication means (16) serve to emit a warning signal, and then to cause the liquid spray system (4) to be activated when the measurement means (12) detect that the distance between the spray head (41) and the medium (8) is once again less than the predetermined maximum value, and simultaneously the movement detector means detect movement of the spray head (41) once again.

## Patentansprüche

1. Schreibgerät, bestehend aus einem im Wesentlichen röhrenförmigen Element (2), das sich zwischen einem ersten Ende (2a) und einem zweiten Ende (2b) erstreckt und das dazu vorgesehen ist, in der Hand eines Benutzers gehalten zu werden, wobei dieses röhrenförmige Element (2)
- einen Flüssigkeitstank (3),
- ein Flüssigkeits-Spritzsystem (4) mit einem Flüssigkeits-Spritzkopf (41), der mit dem Flüssigkeitstank (3) verbunden ist, wobei der Spritzkopf (41) dazu vorgesehen ist, die Flüssigkeit aus einer Distanz auf einen Träger (8) zu spritzen,
- eine Verarbeitungseinheit (6), die dazu vorgesehen ist, das Flüssigkeits-Spritzsystem (4) zu aktivieren, damit der Spritzkopf (41) die Flüssigkeit aus einer Distanz auf einen Träger (8) spritzen kann, und
- Mittel zur Bewegungserkennung (14; 6, 12) des Spritzkopfs (41), wobei diese Mittel zur Bewegungserkennung mit der Verarbeitungseinheit verbunden sind, enthält,
**dadurch gekennzeichnet, dass** dieses röhrenförmige Element ferner Messmittel (12) enthält, um ohne physischen Kontakt des Schreibgeräts (1) mit dem Träger (8) die Distanz zwischen dem Spritzkopf (41) und dem Träger (8) zu messen, wobei die Messmittel (12) mit der Verarbeitungseinheit (6) verbunden sind, und dass die Verarbeitungseinheit (6) geeignet ist, die Aktivierung des Flüssigkeits-Spritzsystems (4) zu steuern, wenn einerseits die Messmittel (12) feststellen, dass die Distanz zwischen dem Spritzkopf (41) und dem Träger (8) geringer ist als ein vorbestimmter Maximalwert, und andererseits die Mittel zur Bewegungserkennung (14; 6, 12) eine Bewegung des Spritzkopfs (41) erkennen.

2. Gerät nach Anspruch 1, bei dem die Verarbeitungseinheit (6) geeignet ist, die Aktivierung des Flüssigkeits-Spritzsystems (4) zu steuern, wenn einerseits die Messmittel (12) feststellen, dass die Distanz zwischen dem Spritzkopf (41) und dem Träger (8) zwischen einem vorbestimmten Minimalwert und dem genannten vorbestimmten Maximalwert beträgt, und andererseits die Mittel zur Bewegungserkennung (1.4; 6, 12) eine Bewegung des Spritzkopfs (41) erkennen.

3. Gerät nach einem der Ansprüche 1 und 2, bei dem die Messmittel (12) ein optisches System (13) umfassen, das dazu vorgesehen ist, die Distanz zwischen dem Spritzkopf und dem Träger zu messen.

4. Gerät nach Anspruch 3, bei dem die Mittel zur Bewegungserkennung von dem optischen System (13) und der Verarbeitungseinheit (6) gebildet werden, die die Bewegungen des Spritzkopfs (41) relativ zu dem Träger (8) in Abhängigkeit von den von dem optischen System (13) gemessenen Distanzen bestimmt.

5. Gerät nach einem der Ansprüche 1 und 2, bei dem die Messmittel (12) eine akustische Ultraschallsonde umfassen, die dazu vorgesehen ist, die Distanz zwischen dem Spritzkopf (41) und dem Träger (8) zu messen.

6. Gerät nach Anspruch 5, bei dem die Mittel zur Bewegungserkennung von der akustischen Sonde und der Verarbeitungseinheit (6) gebildet werden, die die Bewegungen des Spritzkopfs (41) relativ zu dem Träger (8) in Abhängigkeit von den von der akustischen Sonde gemessenen Distanzen bestimmt.

7. Gerät nach einem der Ansprüche 3 und 5, bei dem die Mittel zur Bewegungserkennung einen Beschleunigungsmesser (14) umfassen.

8. Gerät nach einem der vorherigen Ansprüche, bei dem das röhrenförmige Element (2) eine elektrische Stromquelle (10) sowie Mittel zum Unter-Spannung-Setzen (11) enthält, welche mit der elektrischen Stromquelle (10) verbunden sind, wobei diese Mittel zum Unter-Spannung-Setzen (11) vom Benutzer betätigt werden können, um das Flüssigkeits-Spritzsystem (4), die Verarbeitungseinheit (6) und die Messmittel (12) und Mittel zur Bewegungserkennung (14; 6, 12) unter Spannung setzen zu können.

9. Gerät nach einem der vorherigen Ansprüche, bei dem das röhrenförmige Element (2) Mittel zum Aussenden eines auf dem Träger sichtbaren Lichtpunkts umfasst, der die Auftreffstelle des Flüssigkeits-Spritzers auf dem Träger (8) anzeigt.

10. Gerät nach einem der vorherigen Ansprüche, bei dem der Flüssigkeits-Spritzkopf (41) mindestens eine Spritzdüse (43) zum Spritzen von Flüssigkeitströpfchen (7) aufweist, und das Spritzsystem (4) ferner einen elektrischen Signalerzeuger (42) enthält, um die Aktivierung dieser mindestens einen Spritzdüse (43) des Spritzkopfs (41) zu steuern.

11. Gerät nach Anspruch 10, bei dem das röhrenförmige Element (2) eine Außenwand (22) aufweist, an der Auswahlmittel (15) zum Auswählen der Größe der Tröpfchen (7) angebracht sind, wobei diese Auswahlmittel (15) mit dem elektrischen Signalerzeuger (42) des Spritzsystems (4) verbunden sind, um die Frequenz und/oder die Amplitude dieser elektrischen Signale, die die Aktivierung dieser mindestens einen Spritzdüse (43) steuern, variieren zu lassen.

12. Gerät nach einem der vorherigen Ansprüche, bei dem die Verarbeitungseinheit (6) geeignet ist, Kommunikationsmittel (16) zu aktivieren, die dazu vorgesehen sind, ein Alarmsignal für den Benutzer auszusenden, wenn einerseits die Messmittel (12) feststellen, dass die Distanz zwischen dem Spritzkopf (41) und dem Träger (8) mindestens geringer ist als ein vorbestimmter Maximalwert, und andererseits die Mittel zur Bewegungserkennung (14; 6, 12) während eines vorbestimmten Zeitintervalls keinerlei Bewegung des Spritzkopfs (41) erkennen.

13. Gerät nach einem der vorherigen Ansprüche, bei dem, wenn das Flüssigkeits-Spritzsystem (4) während eines ersten Zeitintervalls nicht aktiviert worden ist, die Verarbeitungseinheit (6) geeignet ist, während eines zweiten Zeitintervalls Kommunikationsmittel (16) zu aktivieren, die dazu vorgesehen sind, ein Alarmsignal auszusenden, und sodann die Aktivierung des Flüssigkeits-Spritzsystems (4) zu steuern, wenn die Messmittel (12) feststellen, dass die Distanz zwischen dem Spritzkopf (41) und dem Träger (8) wieder geringer ist als der vorbestimmte Maximalwert, und die Mittel zur Bewegungserkennung wieder eine Bewegung des Spritzkopfs (41) erkennen.
